# EUROPÄISCHE PATENTSCHRIFT

(11) **EP 2 164 731 B1**
(45) Veröffentlichungstag und Bekanntmachung des Hinweises auf die Patenterteilung: **31.08.2011**
(21) Anmeldenummer: 08759719.1
(22) Anmeldetag: 19.05.2008
(51) Int. Cl.: B60T 10/02, F16D 57/04

(54) **HYDRODYNAMISCHER RETARDER**
HYDRODYNAMIC RETARDER
RETARDATEUR HYDRODYNAMIQUE

(30) Priorität: 01.06.2007 DE 102007025675
(43) Veröffentlichungstag der Anmeldung: 24.03.2010
(73) Patentinhaber: ZF Friedrichshafen AG, 88038 Friedrichshafen (DE)
(72) Erfinder: SELINKA, Christian, 97490 Poppenhausen (DE); MAYER-JABS, Reinhold, 88250 Weingarten (DE); MEID, Thomas, 88693 Deggenhausertal (DE); HUHN, Dirk, 88048 Friedrichshafen (DE); PTOCK, Michael, 97453 Schonungen-Waldsachsen (DE); HUBER, Michael, 88085 Langenargen (DE)
(86) Internationale Anmeldenummer: PCT/EP2008/056090
(87) Internationale Veröffentlichungsnummer: WO 2008/145549

(56) Entgegenhaltungen:
- EP-A- 1 380 766
- EP-B- 1 305 535
- WO-A-02/04834

## Beschreibung

### Technisches Gebiet

Die Erfindung betrifft einen hydrodynamischen Retarder gemäß dem Oberbegriff des Anspruches 1.

### Stand der Technik

Durch die EP 1 305 535 B1 oder durch EP 1 380 766 A2 ist ein hydrodynamischer Retarder mit einem ersten Schaufelrad, wirksam als Rotorschaufelrad, und mit einem hierzu konzentrischen zweiten Schaufelrad, wirksam als Statorschaufelrad, bekannt. Diese beiden Schaufelräder bilden gemeinsam einen hydrodynamischen Kreis und sind um eine gemeinsame Drehachse gruppiert, wobei jedes Schaufelrad aus jeweils einem Grundkörper und einer an diesem festen Beschaufelung mit einer Mehrzahl von Schaufeln besteht, die jeweils über Schaufellappen mit Aufnahmen des Grundkörpers in Verbindung stehen.

Grundsätzlich stellt sich bei derartigen Retardern das Problem, dass aufgrund einer mit hoher Geschwindigkeit erfolgenden Einführung frischen Fluides in den hydrodynamischen Kreis Kavitation auftreten kann, was insbesondere an der Beschaufelung des Statorschaufelrades Schäden bewirken kann, und zwar bevorzugt im radial äußeren Bereich der Schaufeln. Aus diesem Grund sind am Statorschaufelrad ausschließlich Schaufeln vorgesehen, die im radial äußeren Bereich gegenüber der dem Rotorschaufelrad zugewandten Strömungskante über eine Anschrägung verfügen. Bei einer derartigen Ausgestaltung der Schaufeln wird allerdings im wesentlichen nur das radial äußerste Ende der Schaufeln vor Kavitation geschützt, nicht aber der am stärksten hiervon betroffene Teil der Schaufeln radial innerhalb dieses radial äußersten Endes. Außerdem kommen derart bearbeitete Schaufeln, die gegenüber konventionellen Schaufeln nicht nur kostspieliger sind, sondern auch radial außen wegen reduzierter Einpasslänge mit geringerer Stabilität im Grundkörper des Schaufelrades sitzen, entlang des gesamten Umfangs des Statorschaufelrades zur Anwendung, auch wenn das Problem der Kavitation hauptsächlich auf den Bereich der Zuströmung frischen Fluids in den hydrodynamischen Kreis oder dicht benachbart zu dieser Zuströmung begrenzt ist.

### Darstellung der Erfindung

Der Erfindung liegt die Aufgabe zugrunde, die Beschaufelung eines Schaufelrades, insbesondere eines Statorschaufelrades, bei einem hydrodynamischen Retarder derart auszubilden, dass sich trotz minimalen Kostenaufwandes für die Beschaufelung und hoher Festigkeit der Beschaufelung innerhalb eines Grundkörpers des Schaufelrades ein minimales Risiko unter der Einwirkung von Kavitation ergibt.

Diese Aufgabe wird erfindungsgemäß durch die im Kennzeichen des Anspruches 1 angegebenen Merkmale gelöst.

Bedingt durch die Ausbildung wenigstens eines Schaufelrades, insbesondere hierbei des Statorschaufelrades, mit zwei Ringsegmenten kann die Verwendung derjenigen Schaufeln, die zur Vermeidung von Kavitaton mit einer Rücknahme ausgebildet sind, auf dasjenige Ringsegment eingeschränkt werden, in welchem zur Versorgung des hydrodynamischen Kreises mit frischem Fluid eine Fluidzufuhr erfolgt, und somit das Risiko einer auf die Schaufeln einwirkenden Kavitation besteht. Dieses Ringsegment wird sich also bevorzugt zwischen einem der Fluidzufuhr zugeordneten Auslaßbereich des entsprechenden Schaufelrades und einem Regelbereich desselben erstrecken. Dem restlichen Umfang dieses Schaufelrades wird indes ein anderes Ringsegment zugewiesen, das anspruchsgemäß Schaufeln mit einer Strömungskante umfasst, die sich zwischen ihrem radial inneren Ende und ihrem radial äußeren Ende zumindest im wesentlichen geradlinig erstrecken, und damit konventionell ausgebildet sind. Das Ringsegment mit den konventionellen Schaufeln soll kurz als erstes Ringsegment bezeichnet werden, und die konventionellen Schaufeln als erste Schaufeln, während die mit einer Rücknahme ausgebildeten Schaufeln als zweite Schaufeln und das diese Schaufeln aufnehmende Ringsegment als zweites Ringsegment benannt ist.

Durch die erfindungsgemäße Maßnahme wird also die Beschaufelung dieses Schaufelrades so ausgelegt, dass in durch Kavitation gefährdeten Bereichen des betreffenden Schaufelrades ausschließlich die gegen Kavitation unempfindlichen zweiten Schaufeln eingesetzt werden, während im restlichen Bereich des Laufrades, in welchem sich Kavitation kaum auswirkt, konstengünstigere und aufgrund erhöhter Tragfläche insbesondere im radial äußeren Bereich einfache montierbare erste Schaufeln, mithin also konventionelle Schaufeln, zur Anwendung kommen.

Die zweiten Schaufeln sind aufgrund der Platzierung der Rücknahme jeweils radial zwischen der Schaufelkante und einem radial äußeren Vorsprung, welcher eine stabile Aufnahme der Schaufeln im Grundkörper des Schaufelrades begünstigt, sowie aufgrund der konkreten geometrischen Ausbildung der Rücknahme mit im wesentlichen bogenförmigem Verlauf sowie aufgrund der kontinuierlichen Ausbildung der Übergänge zwischen Rücknahme und Schaufelkante zum einen sowie zwischen Rücknahme und Vorsprung zum anderen optimal an eine Belastung durch Kavitation angepasst, da Angriffsstellen für die Kavitation soweit als möglich vermieden werden.

### Kurze Beschreibung der Zeichnungen

Die Erfindung ist anhand eines Ausführungsbeispieles näher erläutert. Es zeigt:
- Fig. 1: Die obere Hälfte eines Längsschnittes durch einen hydrodynamischen Retarder mit einem Rotor- und einem Statorschaufelrad;
- Fig. 2: eine Draufsicht auf das herausgezeichnete Statorschaufelrad gemäß der Blickrichtung II-II in Fig. 1;
- Fig. 3: einen Schnitt durch das Statorschaufelrad gemäß der Schnittlinie III-III in Fig. 2;
- Fig. 4: einen Schnitt durch das Statorschaufelrad gemäß der Schnittlinie IV-IV in Fig. 2.

### Bester Weg zur Ausführung der Erfindung

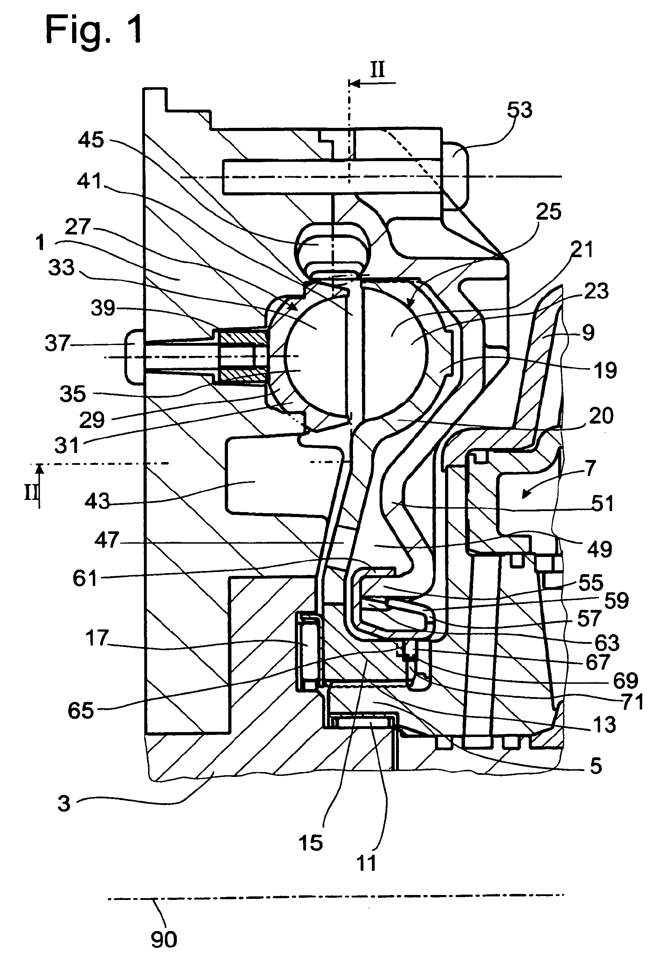

Fig. 1 zeigt einen hydrodynamischen Retarder. Hierzu ist ein mit einem nicht gezeigten Getriebegehäuse drehfester Retarderträger 1 vorgesehen, der ein ebenfalls drehfestes Stützelement 3 radial umschließt. Das Stützelement 3 ist, unter Zwischenschaltung einer Radiallagerung 11, ebenfalls umschlossen, und zwar von einer Kupplungsnabe 5 einer Kupplungseinheit 7, die über ein Kupplungsgehäuse 9 verfügt und in nicht gezeigter Weise mit einer ebenfalls nicht gezeigten Getriebeeingangswelle in drehfester Verbindung steht. Aufgrund dieser Verbindung nimmt die Kupplungseinheit 7 und damit das Kupplungsgehäuse 9 an einer Drehbewegung der Getriebeeingangswelle teil.

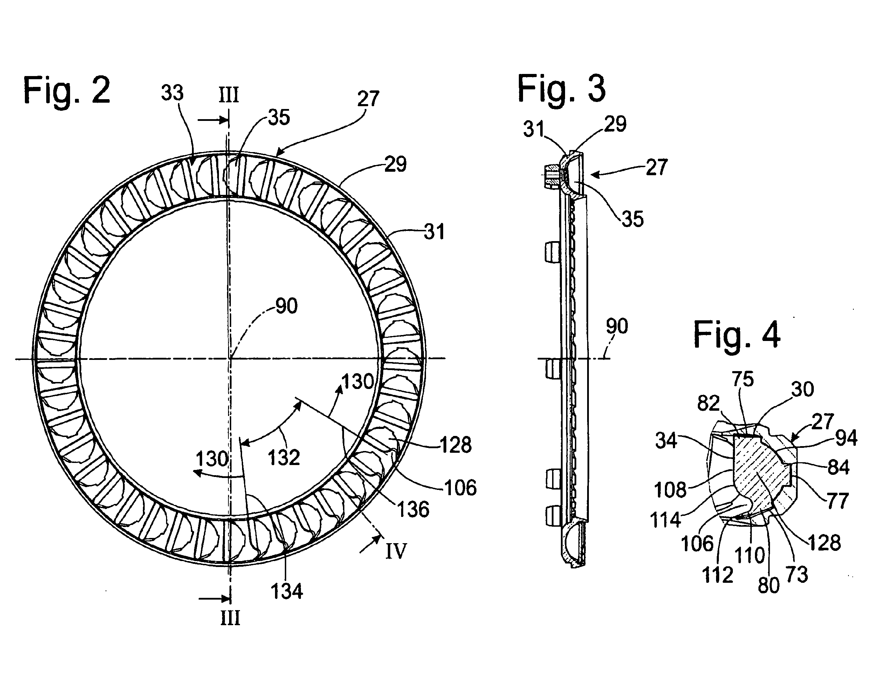

Zurückkommend auf die Kupplungsnabe 5 der Kupplungseinheit 7, steht diese über eine Verzahnung 13 mit einer Rotornabe 15 des Retarders in Eingriff, wobei sich die Rotornabe 15 an ihrer der Kupplungseinheit 7 abgewandten Seite über eine Axiallagerung 17 am Stützelement 3 axial abstützt. Die Rotornabe 15 ist an einem als Rotorschale 20 dienenden Grundkörper 19 befestigt, der sich, ausgehend von der Rotornabe 15, nach radial außen erstreckt und im radial äußeren Bereich eine Beschaufelung 21 mit einer Mehrzahl von Schaufeln 23 zur Bildung eines ersten Schaufelrades in Form eines Rotorschaufelrades 25 aufnimmt. Das Rotorschaufelrad 25 wirkt mit einem zweiten Schaufelrad in Form eines Statorschaufelrades 27 des Retarders zusammen, das ebenfalls über einen Grundkörper 29 verfügt, der als Statorschale 31 wirksam ist und zur Aufnahme einer Beschaufelung 33 mit ersten Schaufeln 35 und zweiten Schaufeln 128 (Fig. 2) dient. An der Statorschale 31 sind an deren vom Rotorschaufelrad 25 abgewandten Seite über den Umfang verteilt Gewindehülsen 39 vorgesehen, in die jeweils ein Befestigungselement 37 einbringbar ist, wobei durch die Befestigungselemente 37 in Verbindung mit den Gewindehülsen 39 das Statorschaufelrad 27 am Retarderträger 1 befestigt ist.

Das Rotorschaufelrad 25 bildet zusammen mit dem Statorschaufelrad 27 einen hydrodynamischen Kreis 41, der mit viskosem Medium zumindest teilweise befüllt ist. Der Füllungsgrad des hydrodynamischen Kreises 41 kann mittels einer Fluidzufuhr 43 erhöht werden, während über einen Fluidauslass 45 viskoses Medium aus dem hydrodynamischen Kreis 41 entzogen werden kann. In bekannter Weise kann über den Befüllungsgrad des hydrodynamischen Kreises 41 dessen Momentenübertragbarkeit und damit die durch den Retarder ausgelöste Bremswirkung eingestellt werden. Die Fluidzufuhr 43 dient somit im Zusammenhang mit dem Fluidauslass 45 zur Regelung des Retarders.

Zurückkommend auf den Grundkörper 19 des Rotorschaufelrades 25, ist in diesem ein Druckausgleich 47 in Form zumindest einer Durchgangsbohrung ausgebildet. Durch diesen Druckausgleich 47 wird der hydrodynamische Kreis 41 mit einem Ausgleichsraum 49 verbunden, der sich axial zwischen dem Grundkörper 19 des Rotorschaufelrades 25 und einem Dichtflansch 51 befindet, der über Befestigungselemente 53 am Retarderträger 1 befestigt ist. Bevor eingehend auf die konstruktive Ausführung dieses Dichtflansches 51 hingewiesen wird, sei kurz die Funktion des Ausgleichsraumes 49 erläutert, der aufgrund des Druckausgleiches 47 über ähnliche Druckbedingungen wie der hydrodynamische Kreis 41 verfügt und somit eine starke einseitige Belastung des Grundkörpers 19 des Rotorschaufelrades 25 von der Seite des hydrodynamischen Kreises 41 aus verhindert.

Der Dichtflansch 51 weist im radial inneren Bereich einen im Wesentlichen auf das Rotorschaufelrad 25 zugerichteten, sich axial erstreckenden Aufnahmevorsprung 55 auf, an welchem eine Ringfederdichtung 57 vorgesehen ist. Diese hintergreift mit einem ersten Schenkel 59 eine am Aufnahmevorsprung 55 vorgesehene Radialnase 63 und umgreift mit einem zweiten Schenkel 61 die radiale Gegenseite des Aufnahmevorsprunges 55. Derart sowohl axial als auch radial am Dichtflansch 51 aufgenommen, belastet die Ringfederdichtung 57 mit einer Bodenfläche 65 die Kupplungsnabe 5. Um an dieser Kontaktstelle zwischen dem ortsfesten Dichtflansch 51 und der rotierenden Kupplungseinheit 7 eine hinreichende Dichtung zu gewährleisten, ist in einer Nutung 69 der Kupplungsnabe 5 ein Dichtring 67 eingesetzt, der vorzugsweise ebenso wie die Nutung 69 von rechteckigem Querschnitt ist. Der Dichtring 67 besteht bevorzugt aus Grauguss, ist aber alternativ auch aus einem elastomeren Werkstoff herstellbar. Dem Dichtring ist eine in der Kupplungsnabe 5 ausgebildete, im Wesentlichen radial verlaufende Schmierbohrung 71 zugeordnet.

Wie aus Fig. 1 entnehmbar, ist der Retarder gegenüber einer Achse 90 zentriert. Diese Achse ist ebenso in Fig. 2 und 3 erkennbar, wobei insbesondere die Fig. 2 zur Darstellung der Beschaufelung 33 im Grundkörper 29 des Statorschaufelrades 27 dient. Fig. 2 lässt weiterhin zwei Ringsegmente 130 und 132 erkennen, wobei das erste Ringsegment 130 sich über die überwiegende Umfangserstreckung des Grundkörpers 29 ausdehnt und erste Schaufeln 35 aufweist, während das zweite Ringsegment 132 sich über die restliche Umfangserstreckung des Grundkörpers 29 ausdehnt und zweite Schaufeln 128 aufweist. Das zweite Ringsegment 132 erstreckt sich zwischen einem der Fluidzufuhr 43 zugeordneten Auslaßbereich 134 und einem demselben in Strömungsrichtung folgenden Regelbereich 136. Während die ersten Schaufeln 35 der Beschaufelung 33 in konventioneller Weise ausgebildet sind und somit nicht mehr behandelt werden müssen, sind die zweiten Schaufeln 128 in nachfolgend beschriebener erfindungsgemäßer Weise ausgebildet. Zur Gestaltung der ersten Schaufeln 35 sowie im Hinblick auf deren Befestigung im Grundkörper 29 des Statorschaufelrades 27 wird auf die DE 103 43 425 A1 verwiesen, so dass dieser Sachverhalt nicht nochmals beschrieben werden soll.

Fig. 4 zeigt einen Umfangsausschnitt des zweiten Ringsegmentes 132 mit zwei in Umfangsrichtung nebeneinander liegenden zweiten Schaufeln 128 des Statorschaufelrads 27. Wie auch für die Aufnahme der ersten Schaufeln 35 der Beschaufelung 33 weist der Grundkörper 29 für die Aufnahme der zweiten Schaufeln 128 eine Mehrzahl an Aufnahmen 73, 75, 77 auf, von denen eine radial äußere Aufnahme 73 und eine radial innere Aufnahme 75 sich gegenüber einer inneren Grundkörperwand 30 mit einer überwiegenden Komponente in Radialrichtung erstrecken, weshalb diese beiden Aufnahmen 73, 75 als Radialaufnahmen bezeichnet werden können. Die Radialaufnahme 73 erstreckt sich hierbei, ausgehend von der inneren Grundköperwand 30, nach radial außen, die Radialaufnahme 75 dagegen nach radial innen. Im Wesentlichen in radialer Mitte eines Schaufelraumes 34 im Grundkörper 29 ist die weitere Aufnahme 77 vorgesehen, die, ausgehend von der inneren Grundkörperwand 30, sich mit einer überwiegenden Komponente in Axialrichtung erstreckt, weshalb diese Aufnahme 77 als Axialaufnahme bezeichnet werden kann.

Wie aus Fig. 4 weiterhin erkennbar ist, verfügen die zweiten Schaufeln 128 jeweils über Schaufellappen 80, 82, die sich, ausgehend von einem grundkörperseitigen Schaufelrand 94, mit einer überwiegenden Komponente in Radialrichtung erstrecken und daher als Radialschaufellappen bezeichnet werden können. Des Weiteren ist etwa in radialer Schaufelmitte ein weiterer Schaufellappen 84 vorgesehen, der sich, ausgehend vom grundkörperseitigen Schaufelrand 94 mit einer überwiegenden Axialkomponente erstreckt und daher als Axialschaufellappen 84 bezeichnet werden kann.

Die dem Axialschaufellappen 84 gegenüberliegende Axialseite der zweiten Schaufel 128 dient als Strömungskante 108. Diese Strömungskante 108 geht an ihrem radial äußeren Ende 114 zumindest im wesentlichen kontinuierlich in eine bevorzugt bogenförmige Rücknahme 106 über, die, radial weiter außen, wiederum im wesentlichen kontinuierlich, in einen Vorsprung 110 übergeht, der sich im Radialbereich des Radialschaufellappens 80 befindet, und sich, ausgehend von diesem, mit einem freien Ende 112 in Richtung zum Rotorschaufelrad 25 erstreckt, wobei der Vorsprung 110 zumindest im wesentlichen ebenso weit wie die Strömungskante 108 an das jeweils andere Schaufelrad 25 heranreicht. Der Vorsprung 110 sorgt für Stabilität für die zweite Schaufel 128 innerhalb des Grundkörpers 29 des Statorschaufelrades 27.

Die Rücknahme 106 in der jeweiligen zweiten Schaufel 128 ist derart platziert, dass diejenige Stelle der Schaufel 128, an welcher kavitationsbedingte Schäden entstehen könnten, so großräumig ausgenommen ist, dass die Wirkung der Kavitation zumindest reduziert oder gar völlig eliminiert ist. Da kavitationsbdingte Schäden zumindest im wesentlichen nur innerhalb des zweiten Ringsegmentes 132 auftreten, also zwischen dem der Fluidzufuhr zugeordneten Auslaßbereich 134 und dem Regelbereich 126 am Statorschaufelrad 27, genügt eine Verwendung der zweiten Schaufeln 128 mit der erfindungsgemäßen geometrischen Veränderung der Strömungskante 108 innerhalb dieses Ringsegmentes 132, während das erste Ringsegment 130 bevorzugt ausschließlich mit den konventionell ausgebildeten ersten Schaufeln 35 versehen sein kann.

Mit Vorzug sind hierbei im zweiten Ringsegment 132 eine Mehrzahl von zweiten Schaufeln 128 vorgesehen, und zwar mit besonderem Vorzug zwischen 5 und 10 Schaufeln 128. Besonders vorteilhaft ist die Verwendung von 7 derartigen Schaufeln 128 im zweiten Ringsegment 132.

## Patentansprüche

1. Hydrodynamischer Retarder mit einem ersten Schaufelrad und mit einem hierzu konzentrischen zweiten Schaufelrad, die gemeinsam einen hydrodynamischen Kreis bilden und um eine gemeinsame Drehachse gruppiert sind, wobei jedes Schaufelrad aus jeweils einem Grundkörper und einer an diesem festen Beschaufelung mit einer Mehrzahl von Schaufeln besteht, die jeweils über Schaufellappen mit Aufnahmen des Grundkörpers in Verbindung stehen,
**dadurch gekennzeichnet,**
**dass** ein erstes Ringsegment (130) wenigstens eines Schaufelrades (27) zumindest eine erste Schaufel (35) aufweist mit einer dem jeweils anderen Schaufelrad (25) zugewandten Strömungskante (108), die über eine zumindest im wesentlichen geradlinig zwischen ihrem radial äußeren Ende und ihrem radial inneren Ende verlaufende Erstreckung verfügt, und in einem zweiten Ringsegment (132) des Schaufelrades (27) wenigstens eine zweite Schaufel (128) vorgesehen ist, die sowohl gegenüber ihrer dem jeweils anderen Schaufelrad (25) zugewandten Strömungskante (108) als auch gegenüber einem in Richtung zum anderen Schaufelrad (25) überstehenden Vorsprung (110) eine Rücknahme (106) aufweist.

2. Hydrodynamischer Retarder nach Anspruch 1,
**dadurch gekennzeichnet,**
**dass** die Rücknahme (106) zwischen einem radial äußeren Ende (114) der Strömungskante (108) und dem Vorsprung (110) vorgesehen ist, wobei sich der Vorsprung (110) zumindest im wesentlichen im radialen Erstreckungsbereich eines radial äußeren Schauffellappens (80) der zweiten Schaufel (128) befindet.

3. Hydrodynamischer Retarder nach Anspruch 1 oder 2,
**dadurch gekennzeichnet,**
**dass** die Rücknahme (106) zwischen dem radial äußeren Ende (114) der Strömungskante (108) und dem Vorsprung (110) im wesentlichen bogenförmig ausgebildet ist, und zumindest im wesentlichen kontinuierlich in die Strömungskante (108) und/oder in den Vorsprung (110) übergeht.

4. Hydrodynamischer Retarder nach Anspruch 1, 2 oder 3,
**dadurch gekennzeichnet,**
**dass** das freie Ende (112) des Vorsprunges (110) der zweiten Schaufel (128) zumindest im wesentlichen ebenso weit an das jeweils andere Schaufelrad (25) angenähert ist wie die Strömungskante (108) der zweiten Schaufel (128).

5. Hydrodynamischer Retarder nach Anspruch 1, 2, 3 oder 4,
**dadurch gekennzeichnet,**
**dass** das als Statorschaufelrad (27) ausgebildete zweite Schaufelrad zur Aufnahme der wenigstens einen mit der Rücknahme (106) versehenen zweiten Schaufel (128) vorgesehen ist.

6. Hydrodynamischer Retarder nach einem der Ansprüche 1 bis 5,
**dadurch gekennzeichnet,**
**dass** das zur Aufnahme von jeweils mit einer Rücknahme (106) versehenen zweiten Schaufeln (128) vorgesehene zweite Ringsegment (132) des entsprechenden Schaufelrades (27) mit einer Mehrzahl der zweiten Schaufeln (128) versehen ist.

7. Hydrodynamischer Retarder nach einem der Ansprüche 1 bis 6,
**dadurch gekennzeichnet,**
**dass** sich das zweite Ringsegment (132) mit den jeweils mit einer Rücknahme (106) versehenen zweiten Schaufeln (128) in einem Bereich zwischen einem der Fluidversorgung zugeordneten Auslassbereich (134) und einem Regelbereich (136) des Schaufelrades (27) erstreckt.

## Claims

1. Hydrodynamic retarder, with a first blade wheel and with a second blade wheel concentric thereto, which together form a hydrodynamic circuit and are grouped about a common axis of rotation, each blade wheel consisting in each case of a basic body and of blading fixed to the latter and having a plurality of blades which are in each case connected via blade tabs to receptacles of the basic body, **characterized in that** a first ring segment (130) of at least one blade wheel (27) has at least one first blade (35) with a flow edge (108) which faces the other blade wheel (25) in each case and which has an extent running at least essentially rectilinearly between its radially outer end and its radially inner end, and, in a second ring segment (132) of the blade wheel (27), at least one second blade (128) is provided, which has a setback (106) both with respect to its flow edge (108) which faces the other blade wheel (25) in each case and with respect to a projection (110) protruding in the direction of the other blade wheel (25).

2. Hydrodynamic retarder according to Claim 1, **characterized in that** the setback (106) is provided between a radially outer end (114) of the flow edge (108) and the projection (110), the projection (110) being located at least essentially in the radial region of extent of a radially outer blade tab (80) of the second blade (128).

3. Hydrodynamic retarder according to Claim 1 or 2, **characterized in that** the setback (106) between the radially outer end (114) of the flow edge (108) and the projection (110) is of essentially arcuate form and emerges at least essentially continuously into the flow edge (108) and/or into the projection (110).

4. Hydrodynamic retarder according to Claim 1, 2 or 3, **characterized in that** the free end (112) of the projection (110) of the second blade (128) is at least essentially just as near to the other blade wheel (25) in each case as the flow edge (108) of the second blade (128).

5. Hydrodynamic retarder according to Claim 1, 2, 3 or 4, **characterized in that** the second blade wheel, designed as a stator blade wheel (27), is provided for receiving the at least one second blade (128) provided with the setback (106).

6. Hydrodynamic retarder according to one of Claims 1 to 5, **characterized in that** the second ring segment (132) of the corresponding blade wheel (27), which second ring segment is intended for receiving second blades (128) provided in each case with a setback (106), is provided with a plurality of the second blades (128).

7. Hydrodynamic retarder according to one of Claims 1 to 6, **characterized in that** the second ring segment (132) having the second blades (128) provided in each case with a setback (106) extends in a region between an outlet region (134) assigned to the fluid supply and a regulating region (136) of the blade wheel (27).

## Revendications

1. Retardateur hydrodynamique comprenant une première roue à aube et une deuxième roue à aube concentrique par rapport à celle-ci, qui forment ensemble un circuit hydrodynamique et qui sont groupées autour d'un axe de rotation commun, chaque roue à aube se composant à chaque fois d'un corps de base et d'un aubage fixé sur celui-ci, avec une pluralité d'aubes, qui sont à chaque fois en liaison par le biais de lobes d'aubes avec des logements du corps de base,
**caractérisé en ce**
**qu'**un premier segment annulaire (130) d'au moins une roue à aube (27) présente au moins une première aube (35) avec une arête d'écoulement (108) tournée vers l'autre roue à aube (25) respective, qui dispose d'une étendue s'étendant au moins sensiblement en ligne droite entre son extrémité radialement extérieure et son extrémité radialement intérieure, et dans un deuxième segment annulaire (132) de la roue à aube (27) est prévue au moins une deuxième aube (128) qui présente un retrait (106) à la fois par rapport à son arête d'écoulement (108) tournée vers l'autre roue à aube (25) respective et par rapport à une saillie (110) saillant dans la direction de l'autre roue à aube (25).

2. Retardateur hydrodynamique selon la revendication 1,
**caractérisé en ce que**
le retrait (106) est prévu entre une extrémité radialement extérieure (114) de l'arête d'écoulement (108) et la saillie (110), la saillie (110) se trouvant au moins sensiblement dans la région d'étendue radiale d'un lobe d'aube (80) radialement extérieur de la deuxième aube (128).

3. Retardateur hydrodynamique selon la revendication 1 ou 2,
**caractérisé en ce que**
le retrait (106) est réalisé entre l'extrémité radialement extérieure (114) de l'arête d'écoulement (108) et la saillie (110) essentiellement en forme d'arc, et se prolonge au moins sensiblement en continu dans l'arête d'écoulement (108) et/ou dans la saillie (110).

4. Retardateur hydrodynamique selon la revendication 1, 2 ou 3,
**caractérisé en ce que**
l'extrémité libre (112) de la saillie (110) de la deuxième aube (128) est rapprochée au moins sensiblement aussi près de l'autre roue à aube (25) respective que l'arête d'écoulement (108) de la deuxième aube (128).

5. Retardateur hydrodynamique selon la revendication 1, 2, 3 ou 4,
**caractérisé en ce que**
la deuxième roue à aube réalisée sous forme de roue à aube statorique (27) est prévue pour recevoir l'au moins une deuxième aube (128) pourvue du retrait (106).

6. Retardateur hydrodynamique selon l'une quelconque des revendications 1 à 5,
**caractérisé en ce que**
le deuxième segment annulaire (132) de la roue à aube (27) correspondante, prévu pour recevoir des deuxièmes aubes (128) pourvues à chaque fois d'un retrait (106), est pourvu d'une pluralité de deuxièmes aubes (128).

7. Retardateur hydrodynamique selon l'une quelconque des revendications 1 à 6,
**caractérisé en ce que**
le deuxième segment annulaire (132) s'étend avec les deuxièmes aubes (128) pourvues à chaque fois d'un retrait (106) dans une région entre une région de sortie (134) associée à l'alimentation en fluide et une région de régulation (136) de la roue à aube (27).
